# EUROPÄISCHE PATENTSCHRIFT

(11) **EP 3 742 943 B1**
(45) Veröffentlichungstag und Bekanntmachung des Hinweises auf die Patenterteilung: **07.06.2023**
(21) Anmeldenummer: 19708768.7
(22) Anmeldetag: 22.01.2019
(51) Int. Cl.: A47J 27/08, A47J 36/06

(54) **DECKEL FÜR EINEN HYBRID-SCHNELLKOCHTOPF**
LID FOR A HYBRID PRESSURE COOKER
COUVERCLE POUR UN AUTOCUISEUR HYBRIDE

(30) Priorität: 22.01.2018 DE 102018000463
(43) Veröffentlichungstag der Anmeldung: 02.12.2020
(73) Patentinhaber: SILAG Handel AG, 40764 Langenfeld (DE)
(72) Erfinder: LAPAWA, Siegfried, 40764 Langenfeld (DE)
(74) Vertreter: Demski, Siegfried
(86) Internationale Anmeldenummer: PCT/DE2019/200003
(87) Internationale Veröffentlichungsnummer: WO 2019/141321

(56) Entgegenhaltungen:
- WO-A1-2014/204043
- DE-A1-102011 052 781
- FR-A1- 2 967 879
- US-A- 5 229 563

## Beschreibung

Die Erfindung betrifft einen Deckel, insbesondere für einen Hybrid-Schnellkochtopf, umfassend zumindest ein gewölbtes Deckelteil für einen aufsetzbaren Drehknauf oder Griff und einem Sicherheits- und/oder Überdruckventil und zumindest einer Dichtung.

Gattungsgemäße Deckel sind in vielfältiger Form bekannt, wobei diese in einer einfachen Ausführungsform mit einem Handgriff versehen sind, um einen Kochtopf abzudecken. Entsprechend der Größe der jeweiligen Kochtöpfe existieren unterschiedliche Größen der Deckel, sodass jeder Kochtopf einen eigenen Deckel erhält. Die Kochtöpfe weisen hierbei einen nach oben abgerundeten und auskragenden Rand auf, der teilweise auch als Schüttrand verwendet wird. Auf diesen abgerundeten Rand kommt der Deckel mit einer entsprechenden formgebenden Randausnehmung zu liegen, sodass im Normalfall eine direkte Auflage ermöglicht wird.

Anders verhält es sich bei Hybrid-Schnellkochtöpfen bei denen sichergestellt werden muss, dass der Deckel eine feste Verbindung mit dem Kochtopf eingeht, weil die Zubereitung der Speisen unter Druck stattfindet. Zu diesem Zweck ist es bekannt, eine Verriegelungsmechanik zu verwenden, welche beispielsweise aus drei um jeweils 120 Grad angeordnete Segmenten besteht, die einerseits an dem Deckel anliegen und andererseits mit Haltemitteln den oberen Rand des Hybrid-Schnellkochtopfes umschließen. Die Haltemittel sind hierbei über einen Drehknauf radial beweglich befestigt und ermöglichen somit ein Verschließen und Öffnen des Hybrid-Schnellkochtopfes. Soweit es sich um Hybrid-Schnellkochtöpfe handelt ist der Deckel zusätzlich mit einem Sicherheits- beziehungsweise Überdruckventil ausgestattet, sodass eine Druckbegrenzung innerhalb des Kochtopfes erfolgen kann. Um den Überdruck entstehen zu lassen, ist im weiteren eine Dichtung erforderlich, welche zwischen dem Kochtopf und dem Deckel angeordnet ist. In der Regel wird diese Dichtung in einer speziellen Nut des Deckels aufgenommen und dichtet mithilfe einer Dichtlippe den Deckel gegenüber der Innenwandung des Kochtopfes ab. Wenn ein Überdruck in dem Kochtopf entsteht, legt sich hierbei ein Teil der Dichtung an die Innenwandung, sodass der Druck nicht entweichen kann.

Bekannte Deckel werden hierbei aus Stahl, vorzugsweise Edelstahl gefertigt und sind entsprechend hochwertig verarbeitet und damit relativ teuer. Dadurch, dass die Deckel aus Stahl beziehungsweise Edelstahl sehr heiß werden und die Temperatur sich aufgrund des verwendeten Materials vollständig auf den Deckel überträgt, werden im weiteren auch die Verriegelungselemente und die Griffteile zumindest teilweise mit erwärmt. Die Gefahr von Brandverletzungen ist somit aufgrund des verwendeten Materials für die Deckel sehr hoch.

Aus der US 5,226,563 A ist ein Dampfdruckkochtopf zur Verwendung in einem Elektroherd, insbesondere Mikrowellenherd bekannt. Der Kochtopf weist eine Kochschale auf, die in einem Abstand vom Innenboden angeordnet ist und eine mikrowellenabsorbierende Schicht besitzt. Der aus Kunststoff bestehende Kochtopf besitzt einen hierzu passenden Kunststoffdeckel.

Aus der WO 2014/204043 A1 ist ein aus Glas bestehender Deckel für einen Schnellkochtopf bekannt, welcher eine radial umlaufende Randverstärkung aufweist. Die Randverstärkung dient zur Aufnahme einer Gummidichtung.

Aus der DE 10 2011 052 781 A1 ist ein Rührgefäß für eine Küchenmaschine der Firma Vorwerk bekannt, welche mit einem Deckel verschließbar ist. Der Deckel weist eine innenliegende umlaufende Dichtung auf und besitzt eine Tasche in die die Dichtung eingepresst ist.

Um das Handling der Deckel zu verbessern und eine mögliche Gefahrenquelle zu reduzieren liegt der vorliegenden Erfindung die Aufgabe zugrunde, einen neuen Deckel aufzuzeigen, welcher die bekannten Nachteile aus dem Stand der Technik vermeidet.

Erfindungsgemäß ist zur Lösung der Aufgabe vorgesehen, dass der Deckel aus Kunststoff besteht und eine umlaufende Randverstärkung mit einer in Richtung auf den Hybrid-Schnellkochtopf ausgerichtete Kröpfung und auf der Unterseite einen radial nach innen versetzten umlaufenden zweiten Rand und die Dichtung eine für den Rand und die Kröpfung ausgebildete Tasche aufweist. Weitere vorteilhafte Ausgestaltungen der Erfindung ergeben sich aus den Unteransprüchen.

Durch die Verwendung eines Deckels aus Kunststoff wird zunächst das Problem gelöst, dass keine Gefahr von Verbrennungen besteht, weil der Kunststoffdeckel sich nicht so stark erhitzt wie ein Metalldeckel. Damit der Kunststoffdeckel ebenso für Hybrid-Schnellkochtöpfe verwendet werden kann, ist im weiteren vorgesehen, dass an dem Deckel eine umlaufende Randverstärkung mit einer in Richtung auf dem Hybrid-Schnellkochtopf ausgerichteten Kröpfung vorhanden ist. Die Kröpfung dient als Haltemittel für die notwendige Dichtung. Die Dichtung selbst besitzt eine für den Randbereich und die Kröpfung ausgebildete Tasche, sodass die Dichtung formschlüssig auf den Kunststoffdeckel aufgesetzt werden kann. Die Dichtung wird hierbei umlaufend um den Deckel angebracht und dichtet den Hybrid-Schnellkochtopf mithilfe des Deckels vollständig ab, sodass ein Überdruck entstehen kann und die Funktion eines Hybrid-5chnetlkochtopfes gewährleistet ist. Der erfmdungsgemäße Deckel kann neben dem Vakuumieren und Schnellkochen auch zum Dünsten und normalen Kochen in vorteilhafter Weise eingesetzt werden.

Der Deckel Ist hierbei mit einer umlaufenden Randverstärkung versehen, welche eine radiale Fixierung der Dichtung im Randbereich ermöglicht, wobei die Kröpfung in einer Tasche der Dichtung aufgenommen wird, sodass die Dichtung eine lösbare aber formschlüssige Verbindung mit dem Kunststoffdeckel aufweist und bei mehrfachen Öffnen und Schließen des Deckels nicht verrutschen kann. Hierbei ist in einer bevorzugten Ausführung vorgesehen, dass der Deckel auf der Oberseite einen abgerundeten umlaufenden Rand und auf der Unterseite die Kröpfung eine nach innen gerichteten Abschrägung aufweist.

In Ausgestaltung der Erfindung ist vorgesehen, dass der Deckel auf der Unterseite einen radial nach innen versetzten umlaufenden zweiten Rand aufweist, welcher einstückig angeformt ist und einen rechteckförmigen Querschnitt besitzt. Der zweite Rand ist hierbei unterhalb des Deckels ausgebildet und steht auf der Unterseite des Deckels vor, sodas ein formschlüssiges Verspannen der umlaufenden Dichtung möglich ist.

In weiterer Ausgestaltung der Erfindung ist vorgesehen, dass der Deckel auf der Unterseite zwischen dem äußeren und inneren Rand radial abgeschrägte Stege aufweist. Durch die abgeschrägten Stege zwischen dem äußeren und inneren Rand auf der Unterseite des Deckels wird erreicht, dass die Dichtung mit Rundung durch die abgeschrägten Stege abgestützt wird und damit die äußere Rundung formschlüssig gegen den oberen Rand des Hybrid-Schnellkochtopfes gedrückt wird.

Um eine ausreichende Stabilität des Deckels zu gewährleisten ist ferner vorgesehen, dass die Unterseite durch radiale Stege und/oder ringförmige Stege beziehungsweise Ringsegmente verstärkt ist. Durch die radialen und ringförmigen Stege wird der Deckel ausreichend ausgesteift, sodass dieser sich bei Erwärmung nicht verformen kann und eine ausreichende Formstabilität besitzt. Die Stege können hierbei einstückig an den Deckel angeformt sein und unterschiedliche Breiten und Höhen aufweisen. Vorzugsweise werden mehreren Stegsegmente verwendet, die durch ringförmige Stege beziehungsweise Ringsegment unterbrochen sind. Die radialen Stege sorgen für eine ausreichende Stabilität radial nach außen, während die ringförmigen Stege oder Ringsegment eine Verwindungssteifigkeit des Deckels gewährleisten und somit eine Verformbarkeit des Deckels während der Erwärmung ausgeschlossen werden kann.

Hierbei können die Stege und Ringsegmente durchgehend oder teilweise unterbrochen ausgeführt sein, je nachdem, welche Stärke die Stege und welcher Durchmesser des Deckels gewählt worden ist. Hierbei besteht keine Notwendigkeit, dass die ringförmigen oder radialen Stege über die gesamte untere Fläche des Deckels ausgebildet sein müssen. Es reicht aus, wenn nur ein Teil der Unterseite des Deckels Stege und Ringsegmente aufweist. Bei besonders flach gehaltenen Deckeln können die Stege entsprechend breiter ausgeführt werden, während bei stärker gewölbten und größeren Deckeln die Breite reduziert werden kann, während die Höhe der Stege vergrößert wird.

Durch die verwendeten Stege und Ringsegmente wird das Flächenvolumen des Deckels auf der Unterseite vergrößert, sodass in vorteilhafter Weise mehr Wasserdampf am Deckel kondensieren kann, bevor das Wasser wieder in den Topf abtropft. Auf diese Welse kann der Garprozess am Topfboden länger wasserarm erfolgen, was zum Beispiel bei Fleischprodukten zu krosseren Ergebnissen führt.

Besonders vorteilhaft ist, dass die Stege einstückig an den Deckel angeformt sind und somit bereits beim Herstellungsprozess mit ausgebildet werden, wodurch die Herstellungskosten sich verringern.

In weiterer Ausgestaltung der Erfindung kann vorgesehen sein, dass die Stege zum Mittelpunkt des Deckels gegenüber der Deckelebene ansteigend ausgebildet sind oder dass der Deckel auf der Unterseite flach ausgebildet ist. Vorzugsweise ist der Deckel auf der Unterseite abgesehen von der Ausbildung mit Stegen flach ausgebildet, gleichbedeutend mit einer ebenen Unterseite zwischen dem inneren Rand, wobei die Stege aufgrund einer gewölbten Oberseite zur Mitte hin eine ansteigende Höhe aufweisen können. Unabhängig davon besteht die Möglichkeit, dass die Stege zusätzlich zum Mittelpunkt eine ansteigende Höhe besitzen können. Hier kommt es auf die jeweilige Größe des Deckels an und den notwendigen Grad einer erforderlichen Aussteifung des Kunststoffdeckels bei besonders großen Deckeln, wobei die Stege im mittleren Bereich besonders breit ausgebildet sein können. Somit würde unterhalb des Drehknaufes oder Griffes eine Maximalhöhe der Stege erreicht, wodurch das Kondensat zur Mitte des Deckels geleitet wird und von diesem in den Kochtopf besser abtropfen kann.

In weiterer Ausgestaltung der Erfindung ist vorgesehen, dass der Deckel auf der Oberseite gewölbt ausgeführt ist und zentrisch angeordnet einen tieferilegenden oder erhabenen Mittelbereich aufweist. Auf der Oberseite kann ein tieferliegender Mittelbereich zentrisch angeordnet sein, welcher zur Aufnahme eines Drahgriffes/Griffes oder Knaufs vorgesehen ist, sodass die Gesamthöhe des Deckels nicht vergrößert wird. Alternativ kann der Griff oder Knauf auf einem erhabenen Mittelbereich aufgesetzt werden.

In weiterer Ausgestaltung ist vorgesehen, dass der Deckel im Zentrum eine Bohrung und hiervon abgesetzt in Radialrichtung zumindest eine zweite Bohrung aufweist. Die Bohrungen sind hierbei zur Aufnahme des Sicherheits- und/oder Überdruckventils vorgesehen. Das Sicherheits- und/oder Überdruckventil kann den entstehenden Druck innerhalb des Kochtopfes begrenzen oder kann bei einer einstellbaren Variante des Überdruckventils durch eine Voreinstellung einen gewünschten Maximaldruck innerhalb des Hybrid-Schnellkochtopfes dadurch einhalten, dass der vorhandene Überdruck in die Atmosphäre entweichen kann. Die zentrische Bohrung kann hierbei zur Aufnahme des Sicherheitsventils verwendet werden, auf welches der Griff oder Knauf gelagert wird. Ebenso besteht die Möglichkeit, dass ein Stift des Deckels In die Bohrung eingesetzt wird, um den Knauf zu fixieren. Soweit eine zweite Bohrung in Radialrichtung vorgesehen ist, wird diese in der Regel für ein Überdruckventil verwendet, um einen übermäßig ansteigenden Innendruck innerhalb des Kochtopfes zu vermeiden. Darüber hinaus besteht die Möglichkeit auf das Sicherheitsventil einen Anschlussadapter aufzusetzen und mithilfe einer Vakuumpumpe, gegebenenfalls nach Entfernen des Knaufs, und Aufsetzen des Anschlussadapters auf den Deckel innerhalb des Hybrid-Schnellkochtopfes ein Vakuum zu erzeugen.

Um eine ausreichende Stabilität der Bohrungen zu gewährleisten Ist im weiteren vorgesehen, dass die erste und zweite Bohrung durch einen runden Kranz auf der Unterseite verstärkt ist und zumindest die zweite Bohrung auf der Oberseite des Deckel einen ring- oder kegelförmigen Ansatz aufweist, um die notwendige Randverstärkung zu gewährleisten.

in weiterer Ausgestaltung der Erfindung ist vorgesehen, dass die Dichtung eingespannt durch den inneren und äußeren Rand des Deckels form- und/oder kraftschlüssig gehalten wird. Die Dichtung wird hierbei über den inneren und äußeren Rand gestülpt, wobei der äußere Rand mit Kröpfung in einer Tasche der Dichtung aufgenommen wird, während der innere Rand in einer weiteren Ausnehmung beziehungsweise Tasche der Dichtung ebenfalls aufgenommen wird. Durch die beiden Aufnahmetaschen der Dichtung wird diese quasi zwischen dem inneren und äußeren Rand eingespannt und sicher fixiert, wobei diese mit entsprechendem Krafteinsatz von dem Deckel zur Reinigung gelöst werden kann. Des weiteren weist die Dichtung eine innere Anlagefläche an den Deckel und eine äußere Anlagefläche für den Rand des Hybrid-Schnellkochtopfes auf. Die Anlagefläche der Dichtung an den Deckel wird durch die abgeschrägten Stege abgestützt und damit gleichzeitig die äußere Anlagefläche zur Anlage an den oberen Rand des Hybrid-Schneilkochtopfes gedrückt.

In weiterer Ausgestaltung der Erfindung weist die Dichtung eine Dichtlippe auf, welche durch eine umlaufende Nut, radial zum Mittelpunkt des Deckels versetzt vom Dichtungskörper elastisch beweglich teilweise getrennt ist, aber mit einem Ende mit dem Dichtungskörper verbunden ist. Die elastische Dichtlippe kann sich beim Garen an den oberen Rand des Hybrid-Schnellkochtopfes anlegen und verhindert somit ein Entweichen des Dampfdruckes.

Auf dem Deckel ist ein Griff oder Knauf aufsetzbar, welcher abnehmbar gestaltet auf beide Ventile gesetzt wird. Der Griff oder Knauf kann hierbei eine korrespondierende ringförmige oder kegelförmige Ausnehmung aufweisen, um das Aufsetzen auf die Ventile zu ermöglichen. Wenn der Griff oder Knauf entfernt wird, kann der Anschlussadapter aufgesetzt werden und durch Anschluss einer Vakuumpumpe innerhalb des Hybrid-Schnellkochtopfes ein Vakuum hergestellt werden. Hierbei wird der Innenraum des Hybrid-Schnellkochtopfes hermetisch durch die Dichtung abgedichtet, und zwar dadurch, dass die Rundung der Dichtung zur Anlage an den oberen Rand gelangt und die Zufuhr von Außenluft verhindert.

Der wesentliche Erfindungsgedanke der vorliegenden Erfindung besteht darin, einen herkömmlichen aus Metall bestehenden Deckel durch einen Kunstdeckel zu ersetzen, der durch eine besonders Gestaltung hohe Qualitätsansprüche erfüllt und darüber hinaus eine Formstabilität aufweist, die zum Beispiel für die Verwendung bei einem Hybrid-Schnellkochtopf geeignet ist. Darüber hinaus besteht die Möglichkeit in diesem Deckel ein Sicherheits- und/oder Überdruckventil vorzusehen, wobei eines der beiden Ventile zum Aufsetzen eines Griffes oder Knaufes verwendet werden kann. Das zweite Ventil wird nach entfernen des Griffes oder Knaufs demgegenüber zum Aufsetzen eines Adapters für eine Vakuumpumpe verwendet, um den Hybrid-Schnellkochtopf einem weiteren Verwendungszweck zuzuführen, und zwar zur Aufbewahrung von bereits gegarten Speisen unter Vakuum. Aus diesem Grunde ist der Deckel gegenüber dem Kochtopf durch eine Dichtung abgedichtet, welche sich an die Innenwandung des Hybrid-Schnellkochtopfes anlegt und die Erzeugung eines Vakuums im Hybrid-Schnellkochtopf ermöglicht. Der Hybrid-Schnellkochtopf kann somit sowohl zum Garen der Speisen als auch zum Aufbewahren verwendet werden.

Die Erfindung wird im Weiteren anhand der Figuren nochmals erläutert.

Es zeigt
- Fig. 1: in einer Draufsicht einen Hybrid-Schnellkochtopf mit einem aufgesetzten Deckel,
- Fig. 2: in einer perspektivischen Unteransicht den Deckel für einen Hy-brid-Schnetikochtopf,
- Fig. 3: in einer Draufsicht den Deckel,
- Fig. 4: in einer Seitenansicht den Deckel,
- Fig. 5: in einer Unteransicht den Deckel mit einer Schnittdarstellung gemäß der Verbindungslinie A-A,
- Fig. 6: in einer perspektivischen Darstellung eine Gummidichtung, wie sie für den Deckel des Hybrid-Schnellkochtopfes verwendet wird,
- Fig. 7: eine Draufsicht auf die Gummidichtung,
- Fig. 8: eine Unteransicht der Gummidichtung und
- Fig. 9: eine Seitenansicht der Gummidichtung sowie eine Schnittdarstellung entlang der Verbindungslinie B-B.

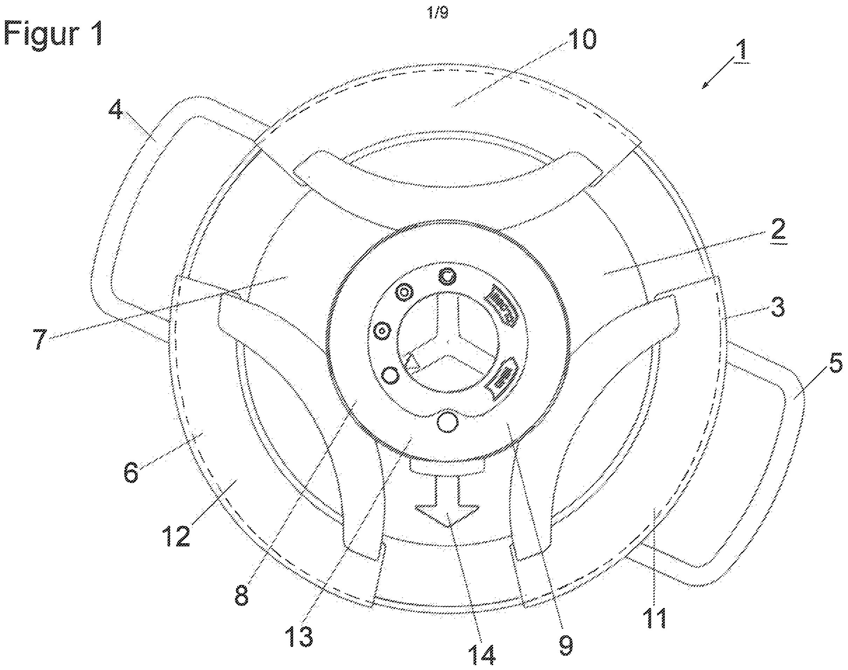

Figur 1 zeigt in einer Draufsicht einen Hybrid-Schnellkochtopf 1, auf den ein Deckel 2 aufgesetzt ist. Der Deckel 2 ruht hierbei auf einem umlaufenden Rand 3 des Hybrid-Schnellkochtopfes 1, von welchem nur die beiden Griffe 4, 5 zu erkennen sind.

Der Deckel 2 besitzt ebenfalls einen umlaufenden Rand 6, welcher auf dem Rand 3 des Hybrid-Schnellkochtopfes 1 zu liegen kommt. Der Deckel 2 ist nach oben hin im Mittelbereich 7 gewölbt ausgeführt und weist eine Vertiefung 8 auf, in der ein Drehknauf 9 einliegt. Der Deckel 2 wird über drei Haltesegmente 10, 11, 12 mit dem Hybrid-Schnellkochtopf 1 verbunden. Die Haltesegmente 10, 11, 12 umgreifen hierbei sowohl den Rand 6 des Deckels 2 als auch den Rand 3 des Hybrid-Schnellkochtopfes 1, wobei durch eine Dichtung der Deckel 2 gegenüber dem Hybrid-Schnellkochtopf 1 abgedichtet wird. Zu diesem Zweck ist der Deckel 2 mit einer aus dieser Ansicht nicht ersichtlichen Dichtung ausgestattet, welche an der Innenwandung des Hybrid-Schnellkochtopfes 1 zu liegen kommt,

Die Haltesegmente 10, 11, 12 sind über einen Drehknauf 9 radial verstellbar, und zwar in der Weise, dass durch Drehen des Drehknaufes 9 über eine nicht ersichtliche Mechanik die Haltesegmente 10, 11, 12 radial nach außen bewegt werden können, sodass durch Anheben des Drehknaufes 9 der Deckel 2 abgehoben werden kann. Wird der Drehknauf 13 in entgegengesetzte Richtung gedreht umgreifen die Haltesegmente 10, 11, 12 den Rand β des Deckels 2 und den Rand 3 des Hybrid-Schnellkochtopfes 1, um einen Garprozess bei Überdruck innerhalb des Hybrid-Schnellkochtopfes 1 vornehmen zu können.

Der Drehknauf 9 ist durch eine Schiebemechanik zusätzlich von dem Deckel 2 lösbar, sodass gegebenenfalls auch ein anderer Griff oder Knauf ohne Haltesegmente 10, 11, 12 verwendet werden kann. Der Drehknauf 9 weist zudem zwei verdeckt liegende Ausnehmungen auf, welche über das Sicherheits- und Überdruckventil gestülpt werden, wobei eine Befestigung des Drehknaufes 9 mit Haltesegmenten 10, 11, 12 unmittelbar an dem Sicherheitsventil erfolgt. Über einen nicht dargestellten Austrittkanal kann der aus dem Überdruckventil abgegebene Wrasen in Pfeilrichtung 14 nach außen geleitet werden.

Obwohl standard mäßig der Deckel 2 aus Stahl gefertigt wird, sieht die vorliegende Erfindung vor, dass anstelle eines Stahldeckels beziehungsweise Edelstahldeckels ein Kunststoffdeckel 20 zum Einsatz kommt, welcher in den nachfolgenden Figuren näher beschrieben wird.

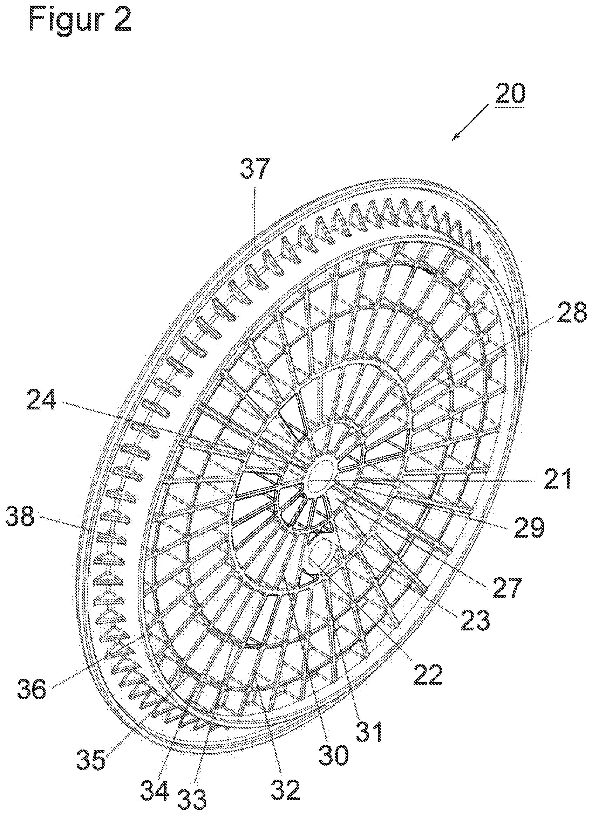

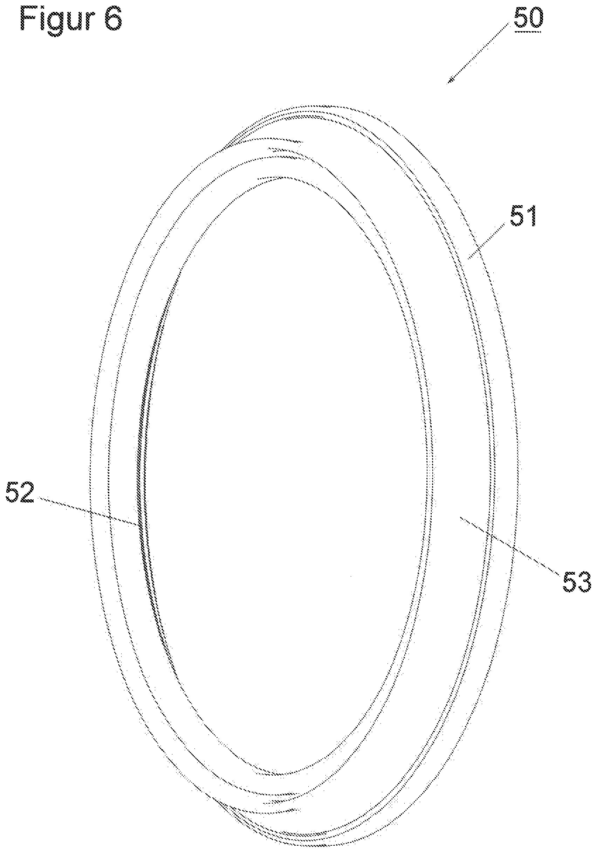

Figur 2 zeigt in einer perspektivischen Unteransicht einen Deckel 20 wie er zusammen mit einer in den Figuren 6 bis 9 dargestellten Dichtung mit einem Hybrid-Schnellkochtopf 1 verwendet wird. Es handelt sich um einen Kunststoffdeckel 20, welcher durch radiale und ringförmige Stege verstärkt ist. Aus dieser perspektivischen Unteransicht wird deutlich, dass der Kunststoffdeckel 20 in einem ersten Innenkreis 27 radiale Stege 28 aufweist, welche sternförmig auseinander laufen. Begrenzt werden die radialen Stege 28 durch ein weiteres Ringsegment 29 an den sich weitere radial ausgerichtete Stege 30 bis zu einem weiteren Ringsegment 31 anschließen. Die zweiten Stege 30 sind hierbei gegenüber den ersten Stegen 28 teilweise umfangs versetzt angeordnet, können aber ebenso eine gleiche Ausrichtung aufweisen. Weitere Stege 32 schließen sich an das Ringsegment 31 bis zu einem weiteren Ringsegment 33 an. Zwischen dem Ringsegment 33 und einem Ringsegment 35 befinden sich Stege 34. Die Stege 34 verlaufen bis zu einem inneren Rand 36, welcher gegenüber den Stegen 28, 30, 32, 34 hervorstehend ausgebildet. Dieser innere Rand 36 dient gleichzeitig zur späteren Fixierung der Dichtung. Ein zweiter äußerer Rand 37 bildet den Abschluss des Deckels 20, wobei zwischen dem inneren Rand 36 und dem Überstand des Deckels 20 bis zum äußeren Rand 37 dreieckförmige Stegsegmente 38 umfangs verteilt angeordnet sind.

Durch die Anordnung der Ringsegmente 29, 31, 33, 35 und der Stege 28, 30, 32, 34 erfolgt eine Aussteifung des Kunststoffdeckels 20, wobei die Steghöhe und die Stegbreite entsprechend der Größe des Kunststoffdeckels 20 variiert werden kann.

Eine erste Bohrung 21 ist zentrisch im Deckel 20 angeordnet und eine zweite Bohrung 22 radial nach außen versetzt, wobei die Bohrung 21 und 22 durch ein Ringsegment 23, 24 verstärkt sind.

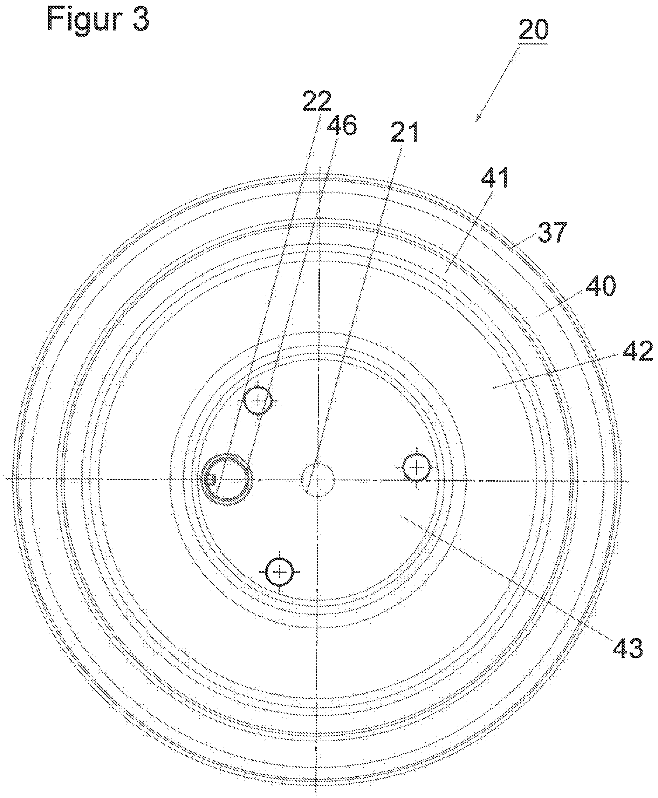

Figur 3 zeigt in einer Draufsicht den Kunststoffdeckel 20 mit dem äußeren Randbereich 37 der zentrischen Bohrung 21 und der davon radial abgesetzten zweiten Bohrung 22 sowie drei runde Anspritzpunkte 39, denen aber im weiteren keine besondere Bedeutung zukommt. Der Kunststoffdeckel 20 Ist auf der Oberfläche mit einem umlaufenden breiten Rand 40 versehen, gefolgt von einer tieferliegenden Nut 41 und einem gewölbten Mittelteil 42, welches eine Vertiefung 43 aufweist. Die beiden Bohrungen 21, 22 dienen zur Aufnahme des Sicherheits- und Überdruckventils, wobei das zentrisch angeordnete Ventil in der Bohrung 21 gleichzeitig zur Festlegung eines Griffes oder Knaufs dient. Der Griff beziehungsweise Knauf ist in dieser Zeichnung nicht dargestellt. Die Bohrung 22 weist auf der Oberseite einen ringförmigen Kranz 44 auf, welcher zur Aussteifung und sicheren Aufnahme des Ventils dient.

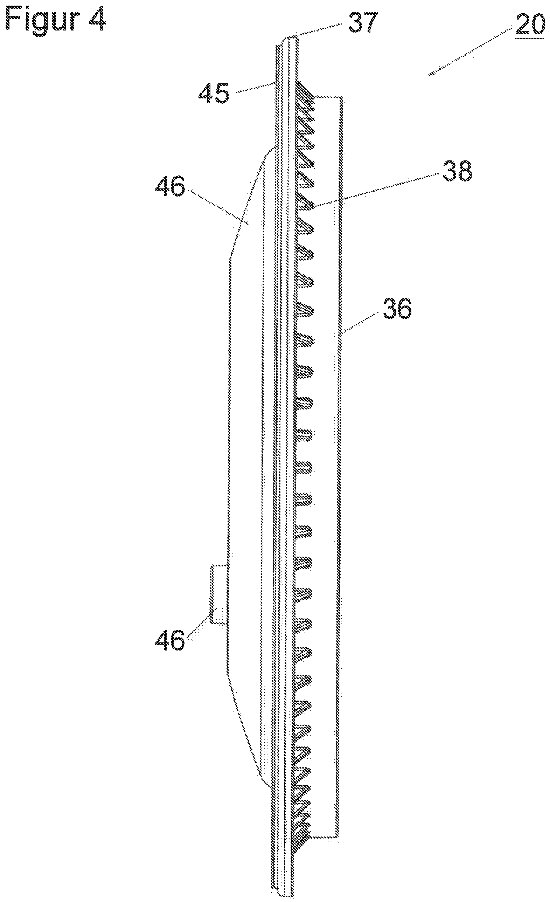

Figur 4 zeigt in einer Seitenansicht den Kunststoffdeckel 20, wie er bereits in den Figuren 2 und 3 gezeigt wird. Aus dieser Seitenansicht wird nochmals deutlich, dass der innere Rand 36 gegenüber dem äußeren Rand 37 nach innen versetzt ist und zudem gegenüber den Stegen deutlich hervorsteht. Aus dieser Ansicht sind nur die dreieckförmigen Stege 36 ersichtlich. Des weiteren wird aus dieser Ansicht deutlich, dass der obere Randbereich 45 des Kunststoffdeckels 20 einen gewölbten erhabenen Bereich 46 aufweist, in dem in einer Mulde die aus dieser Ansicht nicht ersichtlichen Bohrungen 21, 22 eingearbeitet sind. Die radial äußere Bohrung 22 ist hierbei durch einen Ringansatz 47 verstärkt ausgeführt, der über den gewölbten Bereich 46 hervorsteht.

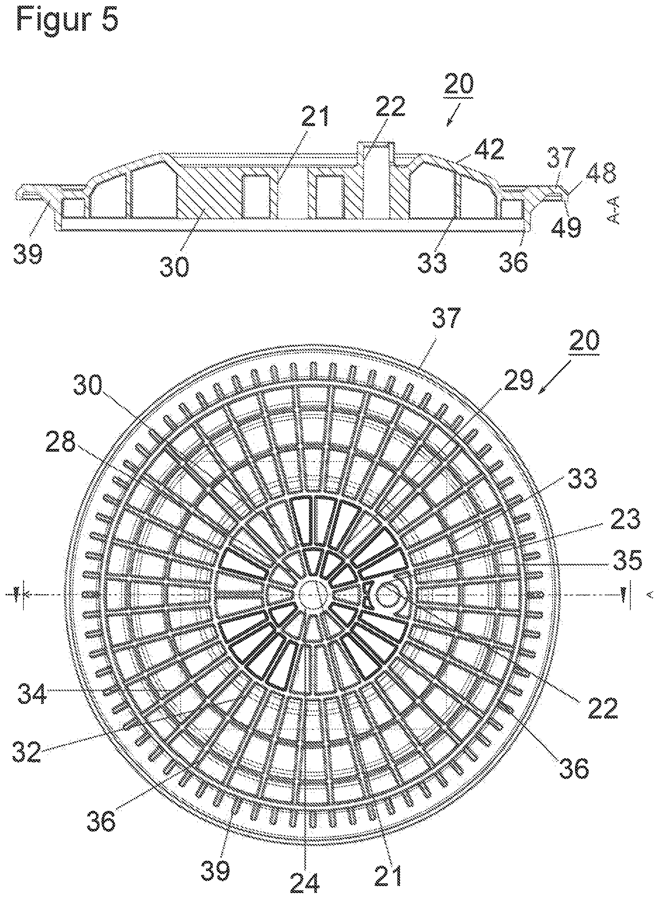

Figur 5 zeigt in einer Unteransicht und einer geschnittenen Ansicht den Kunststoffdeckel 20 mit Ringsegmenten 29, 31, 33, 35 und innerem Rand 36 der über den Stegen 28, 30, 32, 34, 36 hervorsteht. Im weiteren ist aus dieser Ansicht die zentrische Bohrung 21 und die radial davon abgesetzte Bohrung 22 ersichtlich, welche jeweils mit einer Ringsegment 23, 24 versehen sind.

Aus der Schnittdarstellung wird deutlich, dass der innere Rand 36 gegenüber den Ringsegmenten 33, 35 deutlich hervorsteht. Aufgrund der Schnittlinie sind hierbei die weiteren Ringsegmente und Stege nur teilweise erkennbar. Der äußere Rand 37 des Kunststoffdeckels 20 weist eine Rundung 48 und eine Kröpfung 49 auf, wobei die Rundung 48 gegenüber der Deckelfläche einen Versatz aufweist. Sowohl der innere Rand 36 in seiner erhabenen Position als auch der äußere Rand 37 werden zur formschlüssigen Aufnahme einer Dichtung verwendet.

Figur 6 zeigt in einer perspektivischen Ansicht eine Dichtung 50 wie sie bei dem Kunststoffdeckel 20 zum Einsatz kommt. Die Dichtung 50 besitzt einen äußeren Rand 51 und einen Innenrand 52, welche jeweils eine Tasche für den Inneren Rand 36 und den äußeren Rand 37 des Deckels aufweisen. Zwischen dem inneren Rand 52 und dem äußeren Rand 51 der Dichtung 50 ist diese mit einer konkaven Rundung 53 ausgestattet, welche zur Anlage an den oberen Rand eines Hybrid-Schnellkochtopfes gelangt.

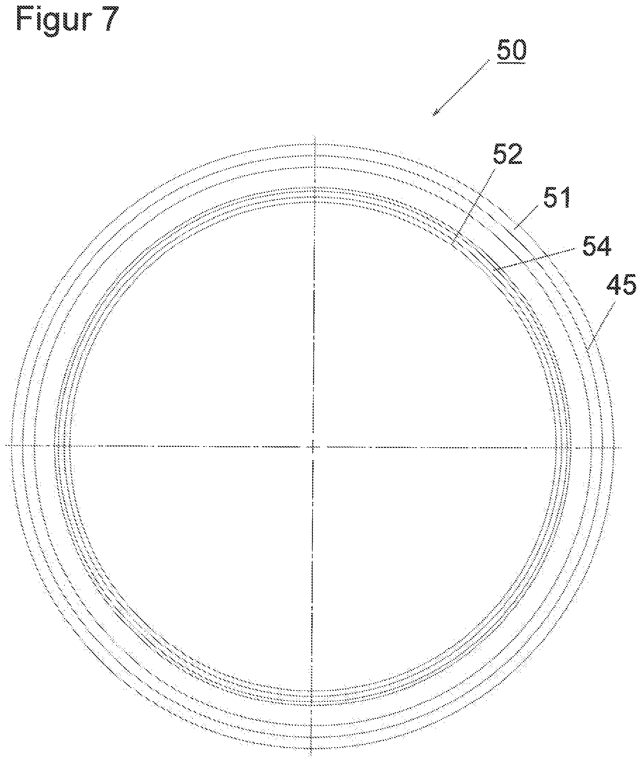

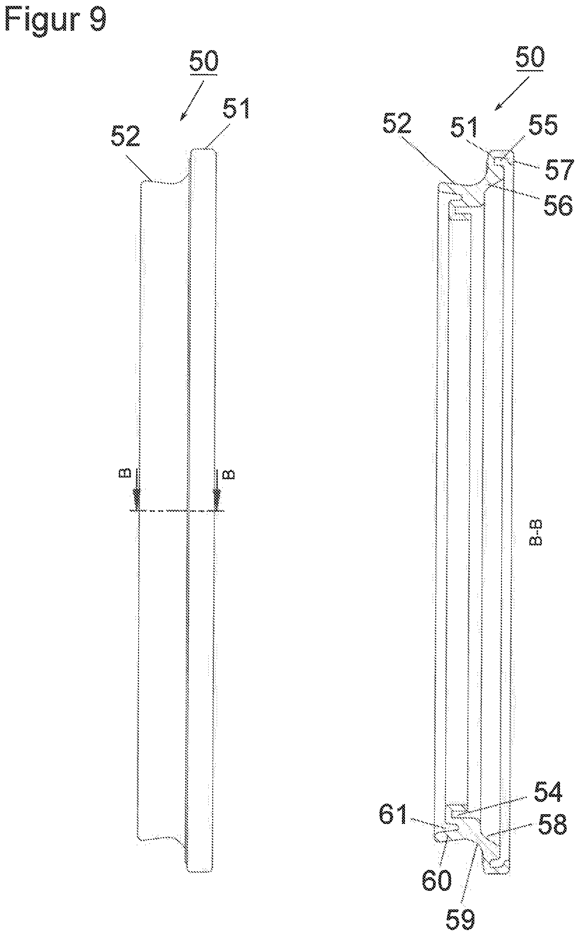

Figur 7 zeigt eine Unteransicht der Dichtung 50 mit einem äußeren Rand 51 und einem inneren Rand 52. Aus dieser Darstellung ist eine erste Tasche 54 ersichtlich, in der der innere Rand 36 des Kunststoffdeckels 20 zu liegen kommt. Eine zweite Tasche 55 liegt verdeckt unterhalb des äußeren Randes 51, wie insbesondere aus der Figur 9 ersichtlich.

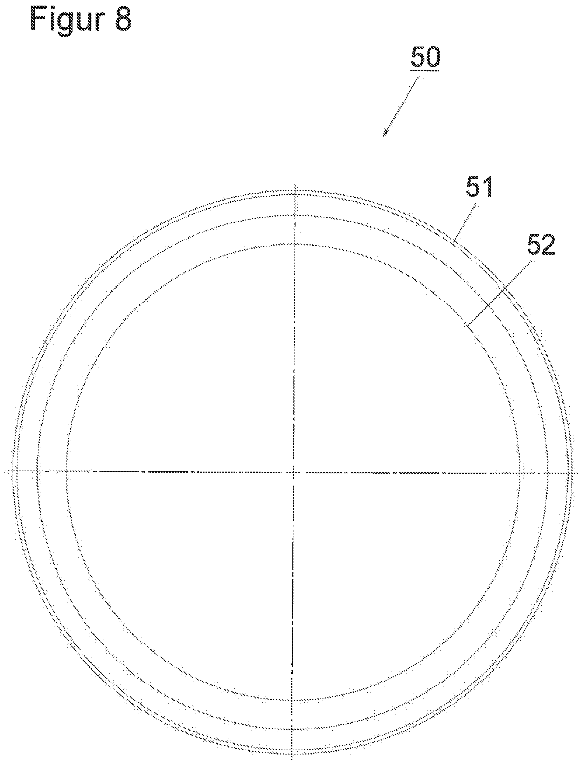

Figur 8 zeigt in einer Draufsicht die Dichtung 50 mit ihrem äußeren Rand 51 und Innerem Rand 52.

Figur 9 zeigt in einer Seitenansicht die Dichtung 50 sowie in einer Schnittdarstellung entlang der Schnittlinie B-B. Aus der Schnittdarstellung wird hierbei ersichtlich, dass die Dichtung 50 aus einem Grundkörper 56 besteht, welcher auf der Oberseite einen äußeren Rand 51 aufweist, der aufgrund der Formgebung zu einer Tasche 55 führt. In dieser Tasche 55 wird der äußere Rand 37 des Kunststoffdeckels 20 aufgenommen, sodass die Dichtung 50 mit einer oberen Überlappung 57 auf dem Rand des Kunststoffdeckels 20 zu liegen kommt. Der Grundkörper 56 weist eine konkave Vertiefung 58 auf, in welche der Randbereich 37 des Deckels 20 mit seinen dreieckförmigen Stegen 38 zu liegen kommt, sodass mithilfe der Stege 39 die Dichtung 50 abgestützt wird und sich formschlüssig an den Kunststoffdeckel 20 anlegen kann. Die Unterseite der Dichtung 50 weist einen inneren Rand 52 auf, der aus einem annähernd rechteckförmigen Ansatz besteht, wobei durch die Formgebung eine zweite Tasche 54 ausgebildet ist, in der der innere Rand 36 des Kunststoffdeckels 20 zu liegen kommt. Durch die Formgebung der Dichtung 50 wird diese nach dem Aufsetzen auf den Kunststoffdeckel 20 quasi durch die beiden Aufnahmetaschen 54, 55 und den inneren Rand 36 und äußeren Rand 37 des Kunststoffdeckels 20 verspannt und gewährleistet einen sicheren Sitz auch beim mehrmaligen Öffnen und Schließen des Hybrid-Schnellkochtopfes. Eine konkave Rundung 59 dient hierbei zur Anlage an den oberen Rand des Hybrid-Schnellkochtopfes um diesen abzudichten, wobei zusätzlich eine Dichtlippe 60 ausgebildet ist, welche durch eine Nut 61 elastisch gegenüber dem Grundkörper 56 ausgebildet ist und beispielsweise bei einer Druckbeaufschlagung während des Garprozesses dazu führt, dass sich die Dichtlippe 60 abdichtend an den oberen Rand des Hybrid-Schnellkochtopfes anlegen kann.

Soweit der Hybrid-Schnellkochtopf zur Erzeugung eines Vakuums und Aufbewahren der gegarten Speisen dient, erfolgt die Abdichtung des Innenraums des Hybrid-Schnellkochtopfes durch die konkave Wölbung 59, welche formschlüssig an dem oberen Rand des Hybrid-Schnellkochtopfes zu liegen kommt, sodass bei der Erzeugung des Vakuums keine Luft in den Innenraum des Hybrid-Schnellkochtopfes gelangen kann.

### Bezugszelchenllste

- 1: Hybrid-Schnellkochtopf
- 2: Deckel
- 3: Rand
- 4: Griff
- 5: Griff
- 6: Rand
- 7: Mittelbereich
- 8: Vertiefung
- 9: Drehknauf
- 10: Haltesegment
- 11: Haltesegment
- 12: Haltesegment
- 14: Pfeilrichtung
- 20: Kunststoffdeckel
- 21: Bohrung
- 22: Bohrung
- 23: Ringsegment
- 24: Ringsegment
- 27: Innenkreis
- 28: Steg
- 29: Ringsegment
- 30: Steg
- 31: Ringsegment
- 32: Steg
- 33: Ringsegment
- 34: Steg
- 35: Ringsegment
- 36: innere Rand
- 37: äußere Rand
- 38: Steg
- 39: Anspritzpunkt
- 40: Rand
- 41: Nut
- 42: Mittelteil
- 43: Vertiefung
- 44: Kranz
- 45: Randbereich
- 46: Bereich
- 47: Ringansatz
- 48: Rundung
- 49: Kröpfung
- 50: Dichtung
- 51: Rand
- 52: Innenrand
- 53: Rundung
- 54: Tasche
- 55: Tasche
- 56: Grundkörper
- 57: Überlappung
- 58: Vertiefung
- 59: Rundung
- 60: Dichtlippe
- 61: Nut

## Patentansprüche

1. Deckel (2), insbesondere für einen Hybrid-Schnellkochtopf (1), umfassend zumindest ein gewölbtes Deckelteil für einen aufsetzbaren Drehknauf (9) oder Griff (4, 5) mit einem Sicherheits- und/oder Überdruckventil und zumindest einer Dichtung (50), wobei der Deckel (2) aus Kunststoff besteht
**dadurch gekennzeichnet,**
**dass** der Deckel (2) eine umlaufende Randverstärkung mit einer in Richtung auf den Hybrid-Schnellkochtopf (1) ausgerichtete Kröpfung (49) und auf der Unterseite einen radial nach innen versetzten umlaufenden zweiten Rand (36) aufweist, wobei die Dichtung (50) eine für den Rand (36) und die Kröpfung (49) ausgebildete Tasche (54, 55) aufweist.

2. Deckel (2) nach Anspruch 1,
**dadurch gekennzeichnet,**
**dass** der Deckel (2) auf der Oberseite einen abgerundeten umlaufenden Rand (3, 6, 40, 51) aufweist, welcher auf der Unterseite eine Kröpfung (49) mit einer nach innen gerichteten Abschrägung aufweist.

3. Deckel (2) nach Anspruch 1 oder 2,
**dadurch gekennzeichnet,**
**dass** der zweite Rand (36) einstückig am Deckel (2) angeformt ist und einen rechteckförmigen Querschnitt besitzt.

4. Deckel (2) nach einem der Ansprüche 1, 2 oder 3,
**dadurch gekennzeichnet,**
**dass** der Deckel auf der Unterseite zwischen dem äußeren und inneren Rand (36) radial abgeschrägte Stege (28, 30, 32, 34, 38) aufweist, und/oder dass der Deckel (2) auf der Unterseite durch radiale Stege (28, 30, 32, 34, 38) und/oder ringförmige Stege (28, 30, 32, 34, 38) beziehungsweise Ringsegmente (23, 24, 29, 31, 33, 35) verstärkt ist, und/oder dass die Stege (28, 30, 32, 34, 38) oder Ringsegmente (23, 24, 29, 31, 33, 35) durchgehend oder teilweise unterbrochen ausgeführt sind.

5. Deckel (2) nach Anspruch 4,
**dadurch gekennzeichnet,**
**dass** die Stege (28, 30, 32, 34, 38) einstückig an den Deckel (2) angeformt sind, und/oder dass die Stege (28, 30, 32, 34, 38) unterschiedliche Breiten und Höhen aufweisen.

6. Deckel (2) nach einem der Ansprüche 4 oder 5,
**dadurch gekennzeichnet,**
**dass** die Stege (28, 30, 32, 34, 38) zum Mittelpunkt des Deckels (2) gegenüber der Deckelebene ansteigend ausgebildet sind, und/oder dass der Deckel (2) auf der Unterseite flach ausgebildet ist.

7. Deckel (2) nach einem der Ansprüche 1 bis 6,
**dadurch gekennzeichnet,**
**dass** der Deckel (2) auf der Oberseite gewölbt ausgeführt ist und zentrisch angeordnet einen tieferliegenden oder erhabenen Mittelbereich (7) aufweist.

8. Deckel (2) nach einem der Ansprüche 1 bis 7,
**dadurch gekennzeichnet,**
**dass** der Deckel (2) im Zentrum eine erste Bohrung (21) und hiervon abgesetzt in Radialrichtung zumindest eine zweite Bohrung (22) aufweist.

9. Deckel (2) nach einem der Ansprüche 1 bis 8,
**dadurch gekennzeichnet,**
**dass** die erste (21) und/oder zweite Bohrung (22) durch einen runden Kranz (44) auf der Unterseite verstärkt ist und zumindest die zweite Bohrung (22) auf der Oberseite des Deckels (2) durch einen ring- oder kegelförmigen Ansatz (38) verstärkt ist.

10. Deckel (2) nach einem der Ansprüche 1 bis 9,
**dadurch gekennzeichnet,**
**dass** die Dichtung (50) eingespannt durch den inneren und äußeren Rand (37) des Deckels form- und/oder kraftschlüssig gehalten ist.

11. Deckel (2) nach einem der Ansprüche 1 bis 10,
**dadurch gekennzeichnet,**
**dass** die Dichtung (50) eine innere Anlagefläche an den Deckel (2) und eine äußere Anlagefläche für den Rand (3, 6, 40, 51) des Hybrid-Schnellkochtopfes (1) aufweist.

12. Deckel (2) nach einem der Ansprüche 1 bis 11,
**dadurch gekennzeichnet,**
**dass** die innere Anlagefläche eine konkave Rundung (48, 53, 59) zum Deckel (2) und eine Nut (41, 61) für den inneren Rand (36) des Deckels (2) sowie eine Aufnahmetasche für den äußeren Rand (37) des Deckels (2) aufweist, und/oder dass die äußere Anlagefläche eine konkave Rundung (48, 53, 59) für den Topfrand mit einer verlängerten Dichtlippe (60) aufweist.

13. Deckel(2) nach einem der Ansprüche 1 bis 12,
**dadurch gekennzeichnet,**
**dass** die Dichtung (50) eine Dichtlippe (60) aufweist, welche durch eine umlaufende Nut (41, 61), radial zum Mittelpunkt des Deckels (2) versetzt, vom Dichtungskörper elastisch beweglich teilweise getrennt ist, aber mit einem Ende mit dem Dichtungskörper verbunden ist,

14. Deckel (2) nach einem der Ansprüche 1 bis 13,
**dadurch gekennzeichnet,**
**dass** auf den Deckel (2) ein austauschbarer Griff oder Knauf aufsetzbar ist, welcher abnehmbar gestaltet auf zwei Ventile, welche in den Bohrungen (12, 22) des Deckels (2) einsitzen, aufsitzt.

15. Deckel (2) nach einem der Ansprüche 1 bis 14,
**dadurch gekennzeichnet,**
**dass** der Deckelknauf eine korrespondierende ringförmige oder kegelförmige Vertiefung (8, 43, 58) für den ringförmigen oder kegelförmigen Ansatz des Deckels (2) aufweist.

## Claims

1. Lid (2), in particular for a hybrid pressure cooker (1), comprising at least one arched lid piece for an attachable rotary knob (9) or grip (4, 5) with a safety and/or pressure valve and at least one seal (50), wherein the lid (2) consists of plastic,
**characterized in that**
the lid (2) comprises a circumferential edge reinforcement with a right-angle bend (49) oriented in the direction towards the hybrid pressure cooker (1), and on the bottom side, a circumferential second edge (36) radially offset towards the interior, the seal (50) comprising a pocket (54, 55) embodied for the edge (36) and the right-angle bend (49).

2. Lid (2) according to claim 1,
**characterized in that**
the lid (2) has, on its upper side, a rounded circumferential edge (3, 6, 40, 51) which has, on its bottom side, a right-angle bend (49) with a bevel oriented towards the interior.

3. Lid (2) according to claim 1 or 2,
**characterized in that**
the second edge (36) is integrally formed to the lid (2) and has a rectangular cross-section.

4. Lid (2) according to one of claims 1, 2 or 3,
**characterized in that**
the lid comprises, on its bottom side between the outer and inner edges (36), radially beveled webs (28, 30, 32, 34, 38), and/or that the lid (2) is reinforced at its bottom side by radial webs (28, 30, 32, 34, 38) and/or annular webs (28, 30, 32, 34, 38) or ring segments (23, 24, 29, 31, 33, 35), and/or that the webs (28, 30, 32, 34, 38) or ring segments (23, 24, 29, 31, 33, 35) are embodied to be continuous or partially interrupted.

5. Lid (2) according to claim 4,
**characterized in that**
the webs (28, 30, 32, 34, 38) are integrally formed to the lid (2), and/or that the webs (28, 30, 32, 34, 38) have different widths and heights.

6. Lid (2) according to one of claims 4 or 5,
**characterized in that**
the webs (28, 30, 32, 34, 38) are embodied to be rising towards the central point of the lid (2) with respect to the lid's plane, and/or that the lid (2) is embodied to be flat on the bottom side.

7. Lid (2) according to one of claims 1 to 6,
**characterized in that**
the lid (2) has an arched design on the upper side and comprises, centrically arranged, a lower or raised central region (7).

8. Lid (2) according to one of claims 1 to 7,
**characterized in that**
the lid (2) comprises a first bore (21) in its center, and in the radial direction offset from it, at least one second bore (22).

9. Lid (2) according to one of claims 1 to 8,
**characterized in that**
the first (21) and/or second bore (22) is/are reinforced by a round collar (44) on the bottom side, and at least the second bore (22) is reinforced on the upper side of the lid (2) by an annular or conical extension (38).

10. Lid (2) according to one of claims 1 to 9,
**characterized in that**
the seal (50) is held, clamped by the inner and outer edges (37) of the lid, with a form-fit and/or a positive fit.

11. Lid (2) according to one of claims 1 to 10,
**characterized in that**
the seal (50) comprises an inner locating surface to the lid (2) and an outer locating surface for the edge (3, 6, 40, 51) of the hybrid pressure cooker (1).

12. Lid (2) according to one of claims 1 to 11,
**characterized in that**
the inner locating surface comprises a concave rounding (48, 53, 59) towards the lid (2) and a groove (41, 61) for the inner edge (36) of the lid (2) as well as a receiving pocket for the outer edge (37) of the lid (2), and/or that the outer locating surface comprises a concave rounding (48, 53, 59) for the cooker's edge with an extended sealing lip (60).

13. Lid (2) according to one of claims 1 to 12,
**characterized in that**
the seal (50) comprises a sealing lip (60) which is partially separated from the sealing body by a circumferential groove (41, 61), radially offset with respect to the center of the lid (2), in an elastically movable manner, but is connected with one end to the sealing body.

14. Lid (2) according to one of claims 1 to 13,
**characterized in that**
an exchangeable grip or knob is attachable to the lid (2) and seated on two valves, designed to be removable, which are sitting in the bores (12, 22) of the lid (2).

15. Lid (2) according to one of claims 1 to 14,
**characterized in that**
the lid knob comprises a corresponding annular or conical indentation (8, 43, 58) for the annular or conical extension of the lid (2).

## Revendications

1. Couvercle (2), notamment pour un autocuiseur hybride (1), comportant au moins une partie voûtée pour un bouton tournant (9) ou un manche (4, 5), comportant une soupape de sécurité et / ou de surpression et au moins un joint d'étanchéité (50), le couvercle (2) étant réalisé en matière plastique,
**caractérisé en ce que**
le couvercle (2) présente un renforcement périphérique comportant une partie coudée (49) orientée en direction de l'autocuiseur hybride (1) et sur la face inférieure un deuxième bord (36) périphérique décalé radialement vers l'intérieur, le joint d'étanchéité (50) présentant un évidement (54, 55) destiné au bord (36) et à la partie coudée (49).

2. Couvercle (2) selon la revendication 1,
**caractérisé en ce que**
le couvercle (2) présente, sur sa face supérieure, un bord périphérique arrondi (3, 6, 40, 51) présentant sur sa face inférieure une partie coudée (49) comportant un chanfrein orienté vers l'intérieur.

3. Couvercle (2) selon la revendication 1 ou 2,
**caractérisé en ce que**
le deuxième bord (36) est moulé en une pièce sur le couvercle (2) et présente une section rectangulaire.

4. Couvercle (2) selon l'une des revendications 1, 2 ou 3,
**caractérisé en ce que**,
à sa face inférieure, entre le bord extérieur et le bord intérieur (36), le couvercle comporte des ailettes (28, 30, 32, 34, 38) radialement chanfreinées, et / ou **en ce qu'**à sa face inférieure, le couvercle (2) est renforcé par des ailettes radiales (28, 30, 32, 34, 38) et / ou par des ailettes annulaires (28, 30, 32, 34, 38) respectivement des segments annulaires (23, 24, 29, 31, 33, 35), et / ou **en ce que** les ailettes (28, 30, 32, 34, 38) ou les segments annulaires (23, 24, 29, 31,33, 35) sont réalisés de manière continue ou partiellement discontinue.

5. Couvercle (2) selon la revendication 4,
**caractérisé en ce que**
les ailettes (28, 30, 32, 34, 38) sont moulées en une pièce sur le couvercle (2) et / ou **en ce que** les ailettes (28, 30, 32, 34, 38) présentent différentes largeurs et hauteurs.

6. Couvercle (2) selon l'une des revendications 4 ou 5,
**caractérisé en ce que**
la forme des ailettes (28, 30, 32, 34, 38) est telle qu'elle est croissante vers le centre du couvercle (2) par rapport au plan du couvercle et /ou **en ce que** la face inférieure du couvercle (2) est réalisée de manière plate.

7. Couvercle (2) selon l'une quelconque des revendications 1 à 6,
**caractérisé en ce que**
le couvercle (2) présente une face supérieure voûtée, tout en ayant une zone centrale (7) de disposition centrée plus basse ou en relief.

8. Couvercle (2) selon l'une des revendications 1 à 7,
**caractérisé en ce que**
**que** le couvercle (2) présente un premier perçage (21) au centre ainsi qu'au moins un deuxième perçage (22) décalé dans le sens radial par rapport au premier.

9. Couvercle (2) selon l'une quelconque des revendications 1 à 8,
**caractérisé en ce que**
le premier perçage (21) et / ou le deuxième perçage (22) est / sont renforcé/s par une couronne annulaire (44) à sa / leur face inférieure et **en ce qu'**au moins le deuxième perçage (22) prévu sur la face supérieure du couvercle (2) est renforcé par un nez annulaire ou conique (38).

10. Couvercle (2) selon l'une quelconque des revendications 1 à 9, **caractérisé en ce que**
le joint d'étanchéité (50) est serré entre le bord intérieur et le bord extérieur (37) par liaison par coopération de forme et / ou de force.

11. Couvercle (2) selon l'une quelconque des revendications 1 à 10,
**caractérisé en ce que**
le joint d'étanchéité (50) présente une surface d'appui au couvercle (2) et une surface d'appui au bord (3, 6, 40, 51) de l'autocuiseur hybride (1).

12. Couvercle (2) selon l'une quelconque des revendications 1 à 11,
**caractérisé en ce que**
la surface de contact intérieure présente une courbure concave (48, 53, 59) vers le couvercle (2) et une rainure (41, 61) pour le bord intérieur (36) du couvercle (2) ainsi qu'un évidement pour recevoir le bord extérieur (37) du couvercle (2) et / ou la surface d'appui extérieure comporte une courbure concave (48, 53, 59) pour le bord de l'autocuiseur avec une lèvre d'étanchéité (60) prolongée.

13. Couvercle (2) selon l'une quelconque des revendications 1 à 12,
**caractérisé en ce que**
le joint d'étanchéité (50) comporte une lèvre d'étanchéité (60) qui est partiellement séparée, radialement décalée par rapport au centre du couvercle (2), du corps du joint d'étanchéité de façon élastiquement mobile par une rainure périphérique (41, 61), mais reliée par une extrémité au corps du joint d'étanchéité.

14. Couvercle (2) selon l'une des revendications 1 à 13,
**caractérisé en ce qu'**
un manche ou une poignée échangeable et amovible peut être monté/e sur le couvercle (2), s'appuyant sur deux soupapes encastrées dans les perçages (12, 22) du couvercle (2).

15. Couvercle (2) selon l'une quelconque des revendications 1 à 14,
**caractérisé en ce que**
la poignée du couvercle présente une cavité annulaire ou conique correspondante (8, 43, 58) pour le nez annulaire ou conique du couvercle (2).
